# EUROPEAN PATENT APPLICATION

(11) **EP 0 899 942 A2**
(43) Date of publication of application: **03.03.1999**
(21) Application number: 98306964.2
(22) Date of filing: 28.08.1998
(51) Int. Cl.: H04N 1/32

(54) **Printing data processing**

(30) Priority: 29.08.1997 KR 9742790
(71) Applicant: Samsung Electronics Co., Ltd., Suwon-City, Kyungi-do (KR)
(72) Inventor: Lee, Yoon-Tae, Kwonsun-gu, Suwon, Kyonggi-do (KR)
(74) Representative: Tunstall, Christopher Stephen

(57) **Abstract**

A method of processing data printing in a scanning and printing system compares the current time and a preset time, gives priority to either data printing requested by a printer function or a facsimile function, and preferentially processes data printing to which the priority is given. The method delays data printing not having priority until data printing having priority is finished, if a request for printing having priority is received during data printing to which priority is not given, and resumes the delayed printing being held after data printing having priority is finished, to improve efficiency of scanning and printing system.

## Description

### BACKGROUND TO THE INVENTION

The present invention relates to a method of processing printing data in image forming apparatus, such as scanning and printing systems.

Generally, scanning and printing systems are devices that can perform multiple functions, and can include devices in which various items of office equipment having independent functions have been integrated into one.

In light of such definition, scanning and printing systems can be constituted in various forms. However, in general, the unique functions of each item of office equipment that serves as basis of data printing are integrated, and a single printing apparatus is shared so as to perform these office equipment functions. An example would be a scanning and printing system having a printer function for printing and outputting data transmitted from a personal computer ("print data") and a facsimile function for printing and outputting data received from external facsimile via a communication line ("facsimile data").

Thus, owing to the above-described scanning and printing system, users may purchase individual office equipment on demand, which reduce the expenses involved in purchasing such equipment. However, as each function being performed by individual office equipment is integrally established in one apparatus, manufacturers may face new problems, for example when a plurality of data printings that cannot be handled in parallel are requested simultaneously. A plurality of data printings cannot be handled simultaneously in scanning and printing systems which print data using a shared single printing apparatus built into a system.

For example, if facsimile data are received from the external device and such data are requested to be printed by a facsimile function, whilst data transmitted from a personal computer are already being printed by the printer function, in a scanning and printing system provided with a printer function and a facsimile function, both data may not be printed at the same time. In addition, the same shall apply where data printing requested by printer function is to be handled when data printing of facsimile is underway.

To settle these problems, conventionally, a switching key for selecting a printer function or a facsimile function is installed on an operating panel of the scanning and printing system. Therefore, users may select either the printer function or the facsimile function in accordance with the operation of the switching key. Thus, data printing of the selected function can be handled while data printing of the unselected function is not.

If facsimile data are received when the printer function is selected by a user, the facsimile data received may be stored in a memory. Then, it possible to print the facsimile data stored in the memory when the printer function is switched to the facsimile function. However, communication via a personal computer are impossible if the facsimile function is selected by a user, and a data printing request by printer function shall be rejected.

Moreover, in this method, a user has to operate the switching key frequently so as to switch to the desired function. If a user forgets to switch to the facsimile function and leaves the printer function selected for a long time, a "memory full" condition, where the quantity of facsimile data received exceeds the capacity of the memory may occur and the data received are likely to be lost in part.

In some cases, a method where printings are executed in accordance with a time sequence is employed. Using this method, the data printing first requested is handled first, to prevent the inconvenience for a user having to operate a switching key to select the printer function or the facsimile function. In addition, facsimile data stored in memory are printed after data printing requested by a printer function is finished, thus lowering the probability that facsimile data may be lost.

However, the above-described conventional scanning and printing system suffer from some problems which will now be explained. First, data printing requested by the printer function may not be executed whilst data printing requested by the facsimile function is being executed. Therefore, a user has to wait until data printing requested by the facsimile function has been completed. Specifically, if there are a lot of facsimile data to be printed, a user has to wait for a long time to use the printer function.

Second, a user may cancel data printing whilst the printing operation is underway, so as to print data urgently needed, since he has to wait until data printing being handled has been completed even when he has print jobs which ought to be dealt with first. Thus, data printing which is underway results in an error. In an office environment where a number of users share a single scanning and printing system, the above problem becomes more serious during the daytime when data printings are frequently requested by the printer function.

### SUMMARY OF THE INVENTION

It is therefore an object of the present invention to provide an improved of processing printing data.

Accordingly, the present invention provides a method of processing printing data in an image forming apparatus in which printing data may be received from a plurality of sources, comprising:
receiving first printing data having a relatively high priority from a first source and second printing data having a relatively low priority from a second source;
processing the first printing data in preference to the second printing data; and
processing the second printing data after the processing of the first printing data is complete.

When the first and second printing data are received substantially simultaneously, processing of the second printing data is preferably delayed until the processing of the first printing data is complete.

When the second printing data are received after the first printing data, processing of the second printing data is preferably delayed until the processing of the first printing data is complete.

When the first printing data are received after the second printing data, processing of the second printing data is preferably interrupted while the first printing data are processed and resumed once the processing of the first printing data is complete. The processing of the second printing data may be interrupted at the end of a page.

The first and second sources may be a facsimile receiver for receiving printing data transmitted from an external facsimile and a printer data receiver for receiving printing data transmitted from a personal computer or vice versa.

The method may comprise the initial step of determining that the current time is within a preset time. The preset time mat have been set by a user using one or more keys of an operating panel of the image forming apparatus or may be set using a printer driver program of a personal computer.

The present invention also provides an image forming apparatus in which printing data may be received from a plurality of sources, comprising:
means for receiving first printing data having a relatively high priority from a first source and second printing data having a relatively low priority from a second source; and
control means for processing the first printing data in preference to the second printing data and processing the second printing data after the processing of the first printing data is complete.

### BRIEF DESCRIPTION OF THE DRAWINGS

The present invention will now be described by way of example with reference to the accompanying drawings in which:
Figure 1 is a schematic block diagram showing the functional configuration of the scanning and printing system of the present invention; and
Figure 2 is a flow diagram showing the operation of the method of processing data printing of scanning and printing system of the present invention.

### DETAILED DESCRIPTION OF THE PREFERRED EMBODIMENTS

The following four cases are possible in the scanning and printing system, at a time where priority is given to a specific function: first, if data printings are requested individually by each function and not simultaneously; second, if data printing is requested at the same time by the function having priority and the function not having priority; third, if data printing is requested by the function not having priority whilst data printing requested by the function having priority is being carried out; and fourth, if data printing is requested by the function having priority whilst data printing requested by the function not having priority is being carried out. In each case, the method of processing data printing of the present invention can be applied as follows.

In the first case, data printing is executed in order of request and with no relation to printing priority, since printings are requested individually. In the second case, data printing requested by the function having priority is executed prior to that requested by the function not having priority. In the third case, data printing underway still goes on because data printing by the function not having priority is requested after data printing by the function having priority has been requested.

In the fourth case, data printing underway will be interrupted since it is requested by the function not having priority, and data printing requested by the function having priority is handled instead. In this case, the scanning and printing system carries out the data printing requested by the function not having priority page-by-page and checks whether data printing is requested by the function having priority. If data printing is requested by the function having priority, data printing underway will be interrupted and data printing requested by the function having priority will be preferentially carried out. When the data printing requested by the function having has been completed, the interrupted data printing, i.e. data printing requested by the function not having priority, will resume. Even in the operation of data printing requested by the function not having priority, data printing will be executed page-by-page and whether data printing is requested by the function having priority will be continually checked.

In each of the above-described cases, users may not allow data printing requested by the function not having priority at a certain time. For example, users may set, in order to receive facsimile data only, the time when printing priority is given to the facsimile function and data printing requested by the printer function may not be processed.

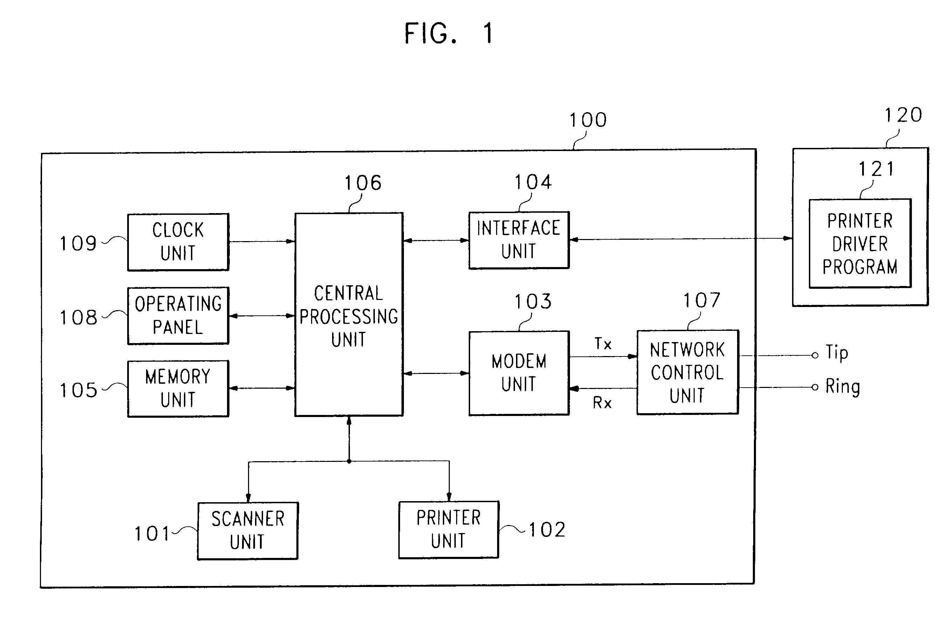

The configuration and operation of the present invention will be described below with reference to the drawings. As shown in Fig. 1, a scanning and printing system 100 includes a scanner unit 101 for scanning image data from an original copy, a printer unit 102 for printing various data, a Modem unit 103 for receiving facsimile data from an external facsimile or for transmitting facsimile data to an external facsimile, an interface unit 104 for transmitting/receiving print data to/from a personal computer 120, a memory unit 105 for storing various kinds of firmware and data for controlling the scanning and printing system 100 and a central processing unit 106 for operating the firmware so as to control each part of the scanning and printing system 100.

In addition, the scanning and printing system 100 further includes a network control unit 107 which serves to connect between the Modem unit 103 and a Public Switched Telephone Network (PSTN), an operating panel 108 provided with function keys and windows for setting printing priority and time and a clock unit 109 for outputting the current time information.

Meanwhile, the personal computer 120 converts document data drawn up in an application program (not shown) into print data to be read by the printer unit 102 of scanning and printing system 100 and includes a printer driver program 121 for controlling driving state of the printer unit 102.

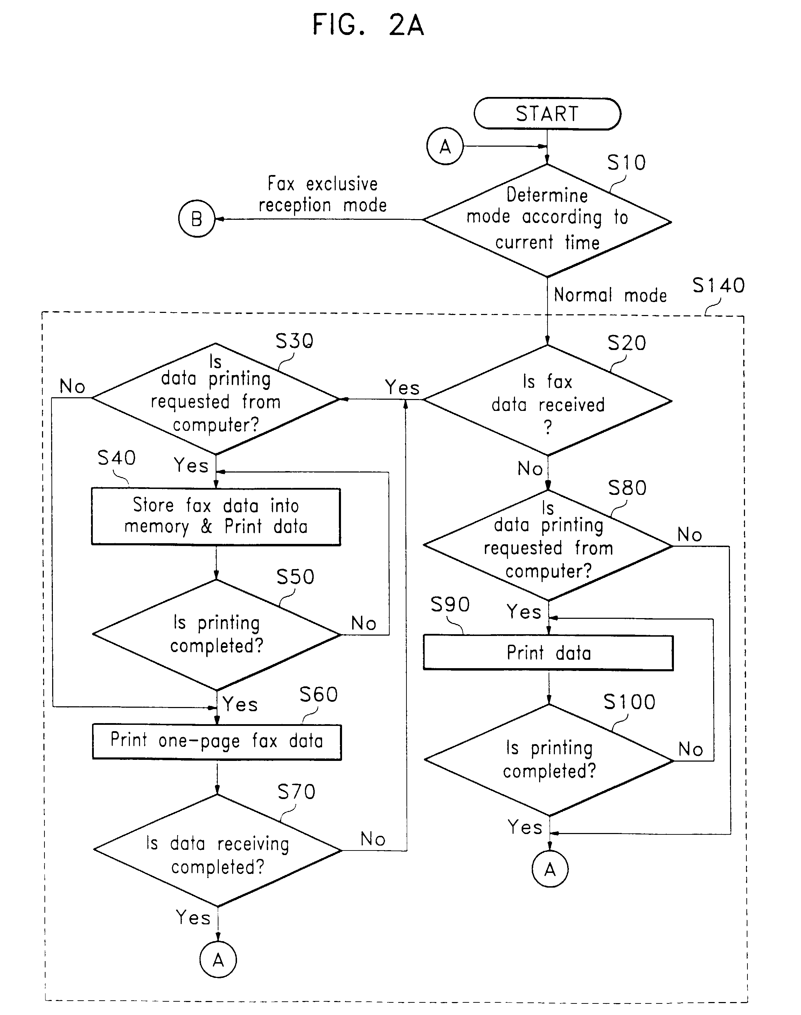

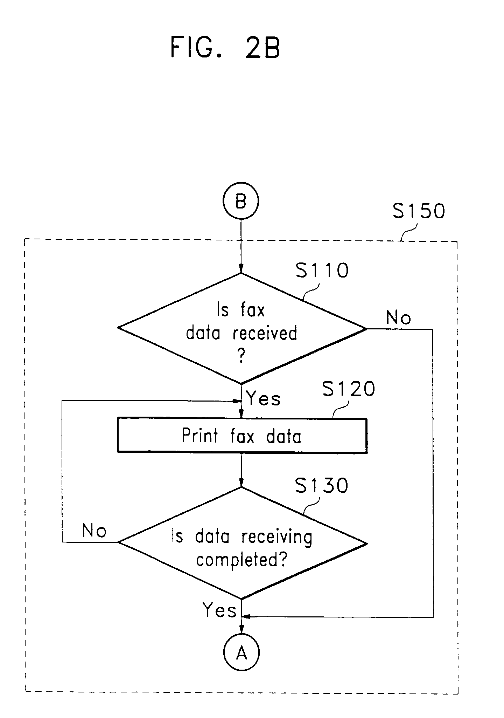

The overall method of processing data printing as shown in Fig. 2 includes steps S140 and S150 for performing a normal mode or a facsimile exclusive reception mode (for receiving facsimile data only) where printing priority is given to the different functions of each mode. Steps S140 and S150 will be selectively performed at a step S10 which serves to determine a mode according to the current time, in such a method that the current time and a preset time are compared and whether the current time is within the preset time is determined.

The normal mode is where printing priority is given to the printer function, and the system is capable of handling both printings requested by the printer function and the facsimile function. However, if both printings are requested at the same time, printing requested by the printer function is handled first. In addition, a facsimile exclusive reception mode is for handling only data printing requested by the facsimile function, not allowing the data printing requested by printer function.

In addition, times for automatic conversion of modes are set by a user and stored in the memory unit 105, which can be changed in accordance with a user's request.

A mode where only printings requested by a printer function are handled is possible, but a user may print data requested by printer function at a preset time while he may not predict the time when facsimile data can be received from an external device. Therefore, such mode is not particularly useful. In addition, a mode where printing priority is given to the facsimile mode may cause inconvenience to the user since he may not print print data at a desired time. Therefore, such mode is not particularly useful either, but neither is excluded.

In operation, first a user sets a time for giving printing priority by means of the operating panel 108 of the scanning and printing system 100 or via the printer driver program 121 of the personal computer 120 and the preset time information is stored in a predetermined area of the memory unit 105. The central processing unit 106 compares the current time information outputted from the clock unit 109 with the preset time information stored in the memory unit 105, determines at the step S10 the mode to be performed, and selectively performs at the step S140 or S150 a normal mode or a facsimile exclusive reception mode.

If the scanning and printing system performs the normal mode at the step S140, the central processing unit 106 determines whether facsimile data are received via the Modem unit 103 at the step S20. If it is determined at the step S20 that facsimile data are received, the central processing unit 106 determines at the step S30 whether printing is requested from the personal computer 120. If it is determined at the step S30 that printing is requested from the personal computer 120, the received facsimile data are stored in the memory unit 105 and print data transmitted from the personal computer 120 are transmitted to the printer unit 102 at the same time so that the printing requested by printer function is handled at the step S40.

Then, when printings for all the print data transmitted from the personal computer 120 have been completed at the step S50, facsimile data stored in the memory unit 105 are transmitted to the printer unit 102. Thus, printing requested by the facsimile function which is interrupted is handled at the step S60.

The central processing unit 106 prints page-by-page the received facsimile data at steps S60 and S70 until printings for all the facsimile data have been completed, and checks whether another printing request is received from the personal computer 120. If another printing request is received from the personal computer 120, the facsimile data being received are stored in the memory unit 105 so as to delay data printing requested by the facsimile function, and other print data are received from the computer 120 and outputted to the printer unit 102. Thus, data printing requested by the printer function is handled at steps S30 to S70.

The central processing unit 106 serves to process page-by-page the data printing requested by facsimile function and occasionally check whether printings are requested by the printer function. Therefore, printings requested by the printer function having printing priority are handled preferentially to those requested by the facsimile function having no printing priority.

If it is determined that no request is received from the personal computer 120 at the step S30, the central processing unit 106 moves to the step S60 and outputs facsimile data received via the Modem unit 103, thereby handling the printing requested by the facsimile function.

Meanwhile, if a request for printing is received at a step S80 from the personal computer 120 when it is determined that facsimile data are not received at the step S20, the central processing unit 106 receives print data from the personal computer 120 and outputs the result to the printer unit 102, thereby handling the printing requested by the printer function at steps S80 and S90. At this time, if facsimile data are received via the Modem unit 103, such facsimile data are stored in the memory unit 105.

Meanwhile, if a mode determined in accordance with the current time at the step S10 is the facsimile exclusive reception mode, the central processing unit 106 checks whether facsimile data are being received via the Modem unit 103 at the step S110. If facsimile data are being received, such facsimile data are outputted to the printer unit 102 and thus data printing requested by facsimile function is handled at steps S120 and S130. At this time, the central processing unit 106 blocks communications to the personal computer 120, thereby printing all facsimile data being received. That is, if a facsimile exclusive reception mode is set, only data printing requested by the facsimile function is handled and that requested by the printer function is not handled.

To summarise the above-described function and operation of the present invention, it is possible in the scanning and printing system of the present invention to switch between facsimile exclusive reception mode for only processing data printing requested by facsimile function according to a preset time and normal mode for selectively processing data printing requested by printer function or facsimile function according to a printing priority. The normal mode is set such that printings requested by the printer function having printing priority are handled preferentially to those requested by the facsimile function not having a priority.

As described above, in the present invention, data printings that are requested simultaneously can be handled sequentially according to a printing priority given to each function in accordance with preset timings set by a user. As a result, various functions of scanning and printing system can be operated with flexibility to enhance print efficiency.

## Claims

1. A method of processing printing data in an image forming apparatus in which printing data may be received from a plurality of sources, comprising:
receiving first printing data having a relatively high priority from a first source and second printing data having a relatively low priority from a second source;
processing the first printing data in preference to the second printing data; and
processing the second printing data after the processing of the first printing data is complete.

2. A method according to claim 1 in which the first and second printing data are received substantially simultaneously and processing of the second printing data is delayed until the processing of the first printing data is complete.

3. A method according to claim 1 in which the second printing data are received after the first printing data and processing of the second printing data is delayed until the processing of the first printing data is complete.

4. A method according to claim 1 in which the first printing data are received after the second printing data and processing of the second printing data is interrupted while the first printing data are processed and resumed once the processing of the first printing data is complete.

5. A method according to claim 4 in which the processing of the second printing data is interrupted at the end of a page.

6. A method according to any preceding claim in which the first and second sources are a facsimile receiver for receiving printing data transmitted from an external facsimile and a printer data receiver for receiving printing data transmitted from a personal computer or vice versa.

7. A method according to any preceding claim in comprising the initial step of determining that the current time is within a preset time.

8. A method according to claim 7 in which the preset time has been set by a user using one or more keys of an operating panel of the image forming apparatus.

9. A method according to claim 7 in which the preset time is set using a printer driver program of a personal computer.

10. An image forming apparatus in which printing data may be received from a plurality of sources, comprising:
means for receiving first printing data having a relatively high priority from a first source and second printing data having a relatively low priority from a second source; and
control means for processing the first printing data in preference to the second printing data and processing the second printing data after the processing of the first printing data is complete.
